# EUROPEAN PATENT SPECIFICATION

(11) **EP 2 170 087 B1**
(45) Date of publication and mention of the grant of the patent: **16.02.2011**
(21) Application number: 08788947.3
(22) Date of filing: 28.07.2008
(51) Int. Cl.: A21C 3/02, A21C 11/24

(54) **PASTA MACHINE FOR DOMESTIC USE WITH IMPROVED COVER**
NUDELMASCHINE FÜR DEN HAUSHALTSGEBRAUCH MIT VERBESSERTER ABDECKUNG
MACHINE À PÂTES DESTINÉE À UN USAGE DOMESTIQUE ÉQUIPÉE D'UN COUVERCLE AMÉLIORÉ

(30) Priority: 31.07.2007 IT PD20070260
(43) Date of publication of application: 07.04.2010
(73) Proprietor: Marcato S.p.A., 35011 Campodarsego (PD) (IT)
(72) Inventor: MARCATO, Pietro, 35010 Campodarsego (PD) (IT)
(86) International application number: PCT/IB2008/001969
(87) International publication number: WO 2009/016465

(56) References cited:
- EP-A- 0 820 696
- EP-A- 1 597 972
- WO-A-02/49439
- DE-U1- 8 703 777
- JP-A- 62 019 042

## Description

It is known how pasta machines for domestic use present on the market are manufactured.

They are made up of a roller bearing structure, consisting of one base and two shoulders; completing the machine are the guards that prevent access to the mechanisms and carters that leave the channel open to the pastry to be worked. The pastry is introduced between the (adjustable) spacing of the two rollers to enable rolling.

The machine is provided also with accessory parts for roller scraping in case residues of the pastry being worked remain attached.

All the above-mentioned parts are currently made of chromate or varnished steel.

Such machines substantially present two types of inconveniences

One concerns functionality and the other health.

The inconvenience concerning functionality is the following:

It is known that the pastry to be worked is obtained by kneading flour and eggs (and/or water) and needs to be reduced to the thickness desired by adjusting the distance between the two smooth rollers.

Once a regular layer of pastry has been obtained, it is passed through the grooved rotating rollers for the pastry to be cut into the usual forms of pasta such as tagliatelle, fettuccine, trenette, etc.

The pastry, in order to be rolled out or cut, must not be dry but must contain a certain quantity of moisture released by the eggs or the water in the mixture. This mixture creates a certain adhesion between the pastry (which on the contrary should roll out smoothly) and the parts below it which, as said, are of chromate or varnished steel (carters).

This adhesion impedes the smooth running of the pastry which should instead be running smoothly, and even (at times) cause the strip of pastry to break transversally. The consumer, in this case, will be unsatisfied and will have to start the rolling process again. An example of said pasta machines for domestic use is show in EP 1597972A.

The other type of inconvenience (of a health aspect so to speak), which occurs on the varnished machines currently on sale, regards the release on the pastry of particles (or components) of the varnish applied to the sheet. This release of contaminated particles could in time be harmful to the health of the consumer who will not be aware immediately of the harmfulness.

The purpose of this patent is to overcome these inconveniences.

The surfaces on examination are finished in such a way as to prevent particles of pastry or flour from sticking to the parts or components.

Furthermore, the hardness of the surfaces is such that they will last in time and, therefore, their characteristic is that of not leaving particles on the pastry during working.

Apart from surface hardness, the material used for this purpose also has a sub-layer with hardness that gradually diminishes down to the hardness of the base metal itself for which the entirety of its characteristics, such as tenacity and tolerance, can be matched up only with those of steel.

For this purpose, the material utilised is aluminium (or aluminium alloy) treated as described here below.

The parts of the cover are hung from a frame to be immersed in a bath for the following treatments that are of both a chemical and an electrolytic type.

Firstly surfactant degreasing is carried out.

Then glazing is carried out in a hot bath (at approx. 50°) containing dissolved aluminium and caustic soda, thus obtaining levelling.

After rinsing, decoating is carried out in an acid solution.

The above-mentioned parts of cover are then treated with a suitable process of electrolytic anodizing, thus obtaining a thin coating which, well anchored to the base, gradually increases the hardness close to the surfaces.

The surface of the levelled type for the previous electrochemical treatment results to be microporous. Following this is a chemical treatment.

After a series of washings at room temperature, the parts are immersed in a hot bath of demineralized water at 90°. Thus "sealing" of the porosities is obtained with a process of hydration.

A surface finishing is obtained which enables the pastry to run smoothly without the occurrence of adhesion.

Surface solidity and hardness prevent the particles from being released on the pastry.

Another advantage of the process described above for the realisation of this patent is that of obtaining, if one wants, machine fairing colouring, without risk of particles being released which could occur when varnishes are applied.

In fact, before sealing it is possible to immerse the various parts in baths of organic pigments (of the type provided for food) which are gradually introduced into the pore cavities.

The shade of colour desired depends on how long the parts remain in the bath.

The above explanations are further clarified by examination of the drawing tables attached herewith.

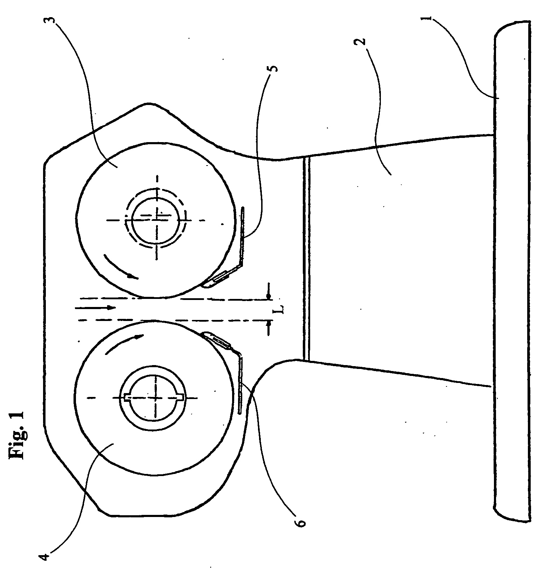

Fig. 1 shows a schematically sketched out pasta machine for domestic use with two cylindrical rollers that roll out the pastry, with scraping laminas that remove any pastry remaining on the parts.

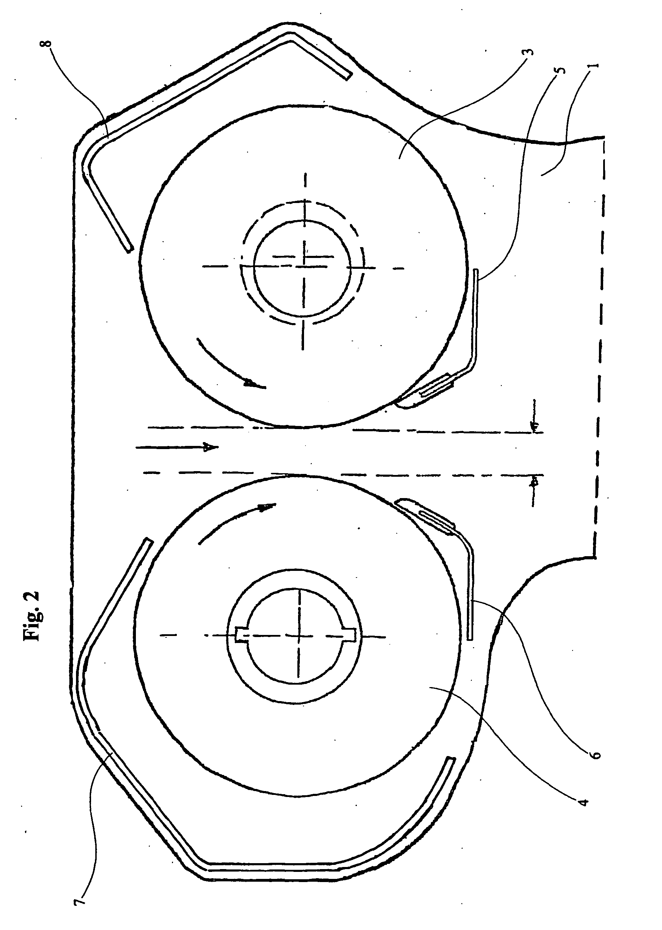

Fig. 2 shows in a simplified and suitably enlarged manner the schematically sketched out upper part of fig. 1 from which the carter parts that cover the rollers are highlighted.

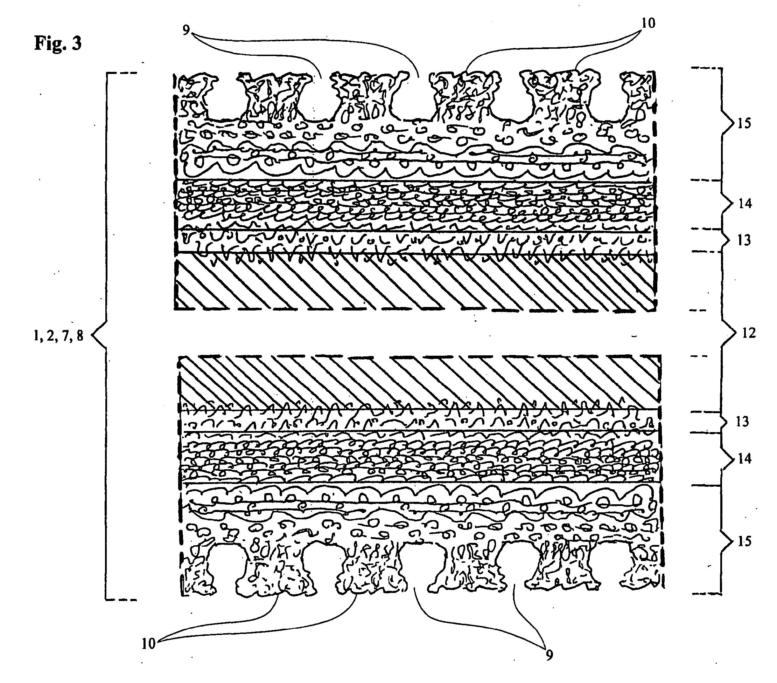

Fig. 3 shows a simplified and schematically sketched out split part of the sheet element constituent of the machine cover treated anodically. Outlined are the different layers of aluminium, the configuration of the levelled-type surface and the presence of the microporosities.

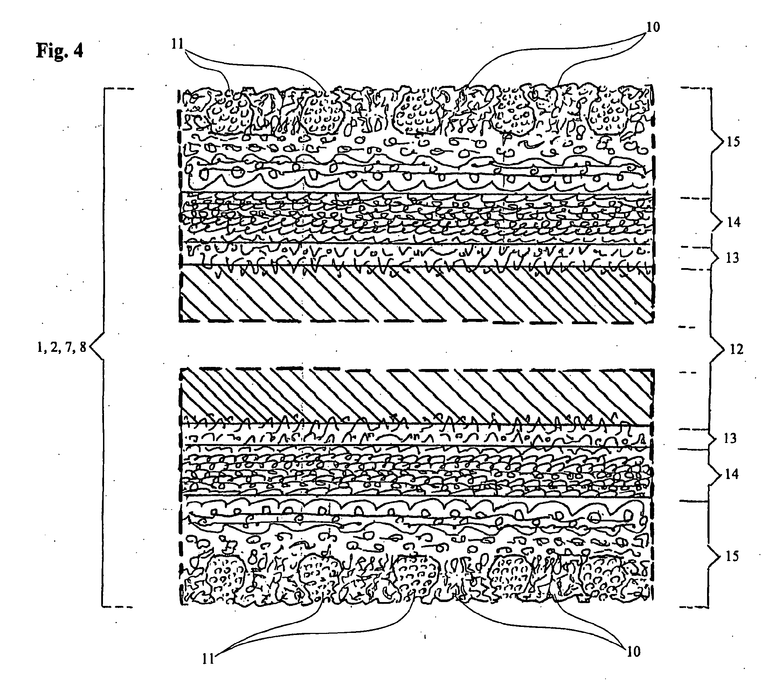

Fig. 4 is the illustration corresponding to fig. 3, where sealing of the microporosities here result to have been carried out.

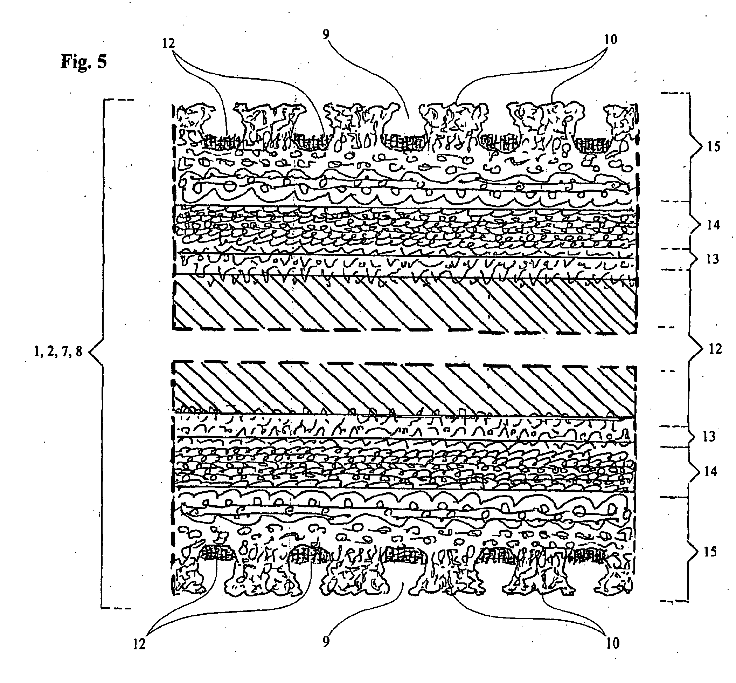

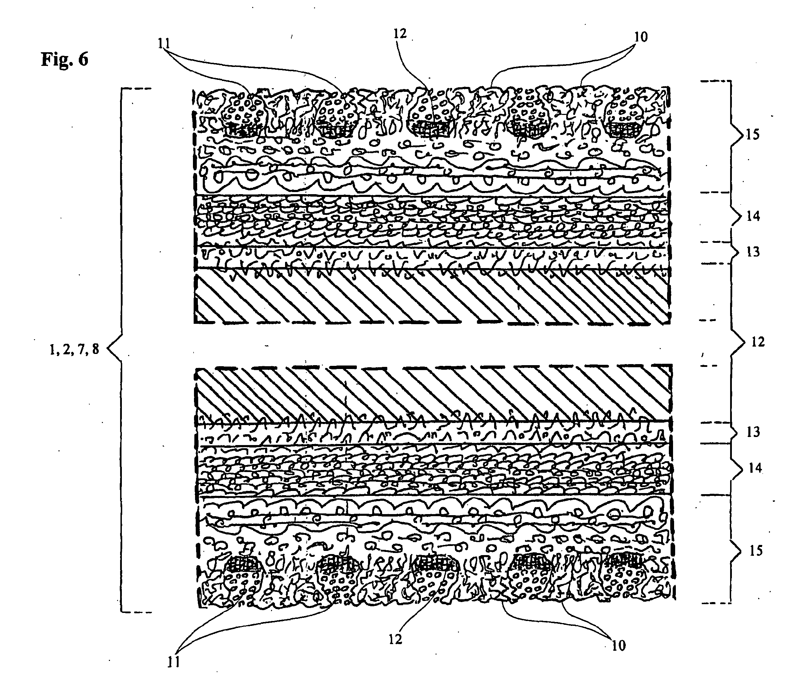

Fig. 5 is the illustration corresponding to fig. 3, where the presence of the pigmentation substance previously introduced can be seen at the bottom of the micropores.

From the figures, it emerges that the machine schematically represented like the usual machines on sale, structurally consists of a base 1, two sides 2 that rise from the base, from the rollers, 3, 4 the shafts of which are sustained by the sides and by the scraping elements 5, 6.

The notch adjuster that controls the eccentric shaft of roller 3 to change the light L is not illustrated.

There is the illustration of the shaped plates 7, 8 situated above rollers 3, 4 to enable the introduction of the pastry between the said rollers for rolling.

From the examination of the section of the sheet portion utilized for the completion of the fairing 1, 2, 7, 8, the central zone 12, the base metal of which consists of aluminium (or aluminium alloy), is marked simply with section lines in the graphic illustration, not having undergone any treatment; whereas on both its sides, near the said central area, three orders of anodizing stratification have been schematically considered, and precisely a first layer 13, called barrier layer which, penetrating with decreasing diffusion in the base metal, determines suitable anchorage; a thin second transition layer 14 which carries out an intensification of compact aluminium; a third layer 15 which is differentiated by a decreasing solidity ending at the surface with a decidedly diffused microporosity creating a microroughness on the surface 10. This microroughness is determined by a porous layer of aluminium in both the A1203 crystalline form and a layer of amorphous aluminium.

With the sealing of the micropores 11 the microroughness becomes almost imperceptible.

The realisation of this patent permits machine fairing colouring without the risk of particles being released that could occur when applying the varnishes adopted in substitution of chromium plating. This is made possible by depositing inside the micropores 9 a number of fairings done as described previously before sealing 11, of the colour pigments 12 (preferably of an organic type). From what has been illustrated even if visually (especially for machines not treated with colour pigments) the machine in the present patent is presented like the usual machines on sale. Actually, the innovations to be found in this machine eliminate the inconveniences relative to adherence of the pastry due to moisture while running over the surface of the fairing which on the other hand concern the machines to be found on the market with chromium-plated or varnished fairing. What is more, they eliminate the inconveniences relative to the release of noxious or polluting particles on the pastry that are harmful to the health.

## Claims

1. Pasta machine for domestic use with improved cover **characterised by** the fact that the various parts forming the cover (1, 2, 7, 8) present a non-stick surface for moist pastry to be worked thanks to the microroughness determined by a porous layer of aluminium oxide in both the A1203 crystalline form and in the amorphous material form and thanks to sealing (11) for hydration of the micropores (9) with a hydration treatment.

2. Pasta machine for domestic use with improved cover according to claim 1 **characterized by** the fact that various parts forming the cover (1, 2, 7, 8) present a coloured surface with no possibility of releasing polluting particles deriving from the varnish surface, colouring having been obtained by depositing colour pigments (12) generally organic, at the bottom of the micropores (9) of the surface microporosities before their sealing (11).

3. A process for obtaining a surface finishing of the cover of a pasta machine for domestic use, comprising the following steps:
• degreasing with surfactant;
• bath glazing at 50° with dissolved aluminium and caustic soda;
• acid-base depatination;
• electrolytic anodizing treatment;
• deposit of colour pigments at bottom of pores prior to sealing;
• pore sealing by hydration at 90°.

## Patentansprüche

1. Nudelmaschine für den Haushaltsgebrauch mit verbesserter Abdeckung, **dadurch** charakterisiert, dass die verschiedenen Bauteile, aus der die Abdeckung besteht (1, 2, 7, 8), dank der Mikrorauheit eine haftabweisende Oberfläche für den zu verarbeitenden feuchten Teig aufweisen. Die Oberfläche besteht aus einer porösen Aluminiumoxidschicht, sowohl in A1203 kristalliner Form als auch in amorpher Form. Die Versiegelung (11) zur Hydratation der Mikroporen (9) erfolgt anhand einer Hydratationsbehandlung.

2. Nudelmaschine für den Haushaltsgebrauch mit verbesserter Abdeckung gemäß Patentanspruch 1, **dadurch** charakterisiert, dass die verschiedenen Bauteile, die die Abdeckung bilden (1, 2, 7, 8), über eine farbige Oberfläche verfügen, die keine verunreinigenden Partikel freigibt, die von der lackierten Oberfläche stammen. Die Farbgebung wurde anhand der Ablagerung organischer Farbpigmente (12) auf dem Boden der Mikroporen (9) der mikroporösen Oberfläche vor deren Versiegelung (11) erzielt.

3. Das Verfahren zur Oberflächenbearbeitung der Abdeckung einer Nudelmaschine für den Haushaltsgebrauch beinhaltet folgende Schritte:
• Entfettung durch Tenside;
• Lasierung in einem 50°C heißen Bad mit gelöstem Aluminium und Natronlauge;
• Säure-Base-Entpatinierung;
• elektrolytische anodische Behandlung;
• Ablagerung von Farbpigmenten auf dem Boden der Poren vor der Versiegelung;
• Versiegelung der Poren durch Hydratation bei 90°C.

## Revendications

1. La machine à pâtes à usage domestique équipée d'un couvercle amélioré se **caractérise par le fait que** les différentes pièces composant le couvercle (1, 2, 7, 8) possèdent une surface anti-adhésive pour la pâte étant pétrie et étirée, grâce à la micro-rugosité obtenue par une couche poreuse d'oxyde d'aluminium composée d'aluminium A1203 sous la forme cristalline et amorphe, et grâce à l'imperméabilisation (11) permettant l'hydratation des micropores (9) par un traitement approprié.

2. La machine à pâtes à usage domestique équipée d'un couvercle amélioré se caractérise, selon la revendication 1, par le fait que les différentes pièces composant le couvercle (1, 2, 7, 8) possèdent une surface colorée ne libérant pas les particules toxiques s'échappant de la surface vernie, la coloration ayant été obtenue par déposition de pigments de couleur (12), généralement de type organique, au fond des micropores (9) de la surface en question avant leur imperméabilisation (11).

3. Le processus permettant de réaliser la finition de la surface du couvercle d'une machine à pâtes à usage domestique se compose des étapes suivantes :
• dégraissage avec un agent tensioactif;
• vitrage dans un bain à 50° composé d'aluminium dissout et de soude caustique;
• dépatinage à base d'acide;
• traitement anodisant électrolytique;
• dépôt de pigments de couleur au fond des pores avant imperméabilisation;
• imperméabilisation des pores par hydratation à 90°.
